Europäisches Patentamt

(19) European Patent Office

Office européen des brevets

(11) Publication number: **0 132 232**
**B1**

(12) **EUROPEAN PATENT SPECIFICATION**

(45) Date of publication of patent specification: **26.09.90**

(51) Int. Cl.⁵: **G 01 S 13/52**

(21) Application number: **84830142.0**

(22) Date of filing: **08.05.84**

(54) **An MTD digital processor for surveillance radar with a bank of Doppler filters and system of thresholds both selectable and dependent on the interference.**

(30) Priority: **15.07.83 IT 4870183**

(43) Date of publication of application:
**23.01.85 Bulletin 85/04**

(45) Publication of the grant of the patent:
**26.09.90 Bulletin 90/39**

(84) Designated Contracting States:
**AT BE DE FR GB NL SE**

(56) References cited:
**DE-A-3 243 606**
**GB-A-2 074 807**
**US-A-4 137 532**

**PROCEEDINGS OF THE IEEE 1978 NATIONAL AEROSPACE AND ELECTRONICS CONFERENCE, NAECON '78, Dayton, Ohio, US, 16th - 18th May 1978, vol. 3, pages 1288-1295, IEEE, New York, US; P. KERNAN: "Moving target detector (MTD) performance with long range radars"**

(73) Proprietor: **SELENIA INDUSTRIE ELETTRONICHE ASSOCIATE S.p.A.**
**Via Tiburtina, KM 12.400**
**I-00131 Roma (IT)**

(72) Inventor: **D'Addio, Egidio**
**Via Terracina 354-/C**
**I-80125 Napoli (IT)**
Inventor: **Galati, Gaspare**
**Via Pisino, 155**
**I-00177 Roma (IT)**
Inventor: **Giaccari, Ennio**
**Via Fogazzaro, 74**
**Roma (IT)**

(74) Representative: **Gustorf, Gerhard, Dipl.-Ing.**
**Patentanwalt Dipl.-Ing. Gerhard Gustorf**
**Bachstrasse 6 A**
**D-8300 Landshut (DE)**

(56) References cited:
**IEEE TRANSACTIONS ON AEROSPACE AND ELECTRONIC SYSTEMS, vol. A2S-15, no. 4, July 1979, pages 508-516, IEEE, New York, US; R.M. O'DONNELL et al.: "Automated tracking for aircraft surveillance radar systems"**

Courier Press, Leamington Spa, England.

## Description

This invention concerns a digital processor for surveillance radar, as disclosed in Claim 1 in particular for air traffic control but not limited only to this; it is formed by a bank of transverse filters which cover the unambiguous Doppler frequency interval, with Doppler frequency response selectable for each filter in order to adapt the filtering to the interference characteristics produced by unwanted echoes (clutter). This processor is denominated A-MTD adaptive-MTD because of the adaptivity characteristic which distinguishes it from the conventional Moving Target Detector (MTD) processor and it will be referred to by this name from now on. At the output of the filters the modulus is extracted and a comparison is made with the detection threshold, adaptive or fixed. The result is fed to the overall detection logic. The selectable filtering of this invention and the selectability between fixed and adaptive thresholds allow the limitations encountered in fixed filtering to be overcome, by optimizing capability of detecting target in various types of interference. The invention described here is within the field of radar systems and in particular of radar signal processor. The signal processor, at present realized with digital type circuits, receive the radar video signal at the input, coherently detected and converted to digital form. At the output they furnish the indication of the targets present (detection process) eliminating, as far as possible, unwanted signals. The elimination of the unwanted signals resulting from reflections from natural or artificial obstacles (clutter) is achieved in the current radar technique with the MTI (Moving Target Indicator) type of filtering, described in many technical articles and books, such as:

(1) M. I. Skolnik: "Introduction to Radar Systems" 2nd Edition McGraw Hill, New York 1980.

(2) D. C. Schleher "MTI Radar" Artech House, 1978.

A later more efficient filtering is that obtained with the MTD (Moving Target Detector) described not only in chapter 4.7 of the Skolnik text referred to above, but in numerous other works such as:

(3) C. E. Muehe: "Moving Target Detector, an Improved Signal Processor" AGARD Conference Proceedings No. 195, 14—17 June 1976, PP 14-1 to 14-10.

(4) R. M. O'Donnel—C. E. Muehe "Automated Tracking for Aircraft Surveillance Radar Systems"—IEEE Trans., Vol. AES 15, No. 4, July 1979, pp. 508—516.

(5) D. Karp—J. R. Anderson: "MTD-II Summary Report" MIT—Lincoln lab. ATC 95, 1st June 1981.

(6) J. R. Anderson—D. Karp "Evaluation of the MTD in High Clutter Environment" IEEE Int. Radar Conf., 1980 pp. 219—224.

(7) J. W. Taylor: "Sacrifices in Radar Clutter Suppression due to Compromises in Implementation of Digital Filters" Radar 82 Conf., London, 18—20 October 1982, pp. 46—50.

(8) E. Cristofalo—G. Galati: "On the Azimuthal Accuracy of an FFT—based Signal Processor for Air Traffic Control Radars" Rivista Tecnica Selenia. Vol. 7, No. 1—1980 pp. 8—16.

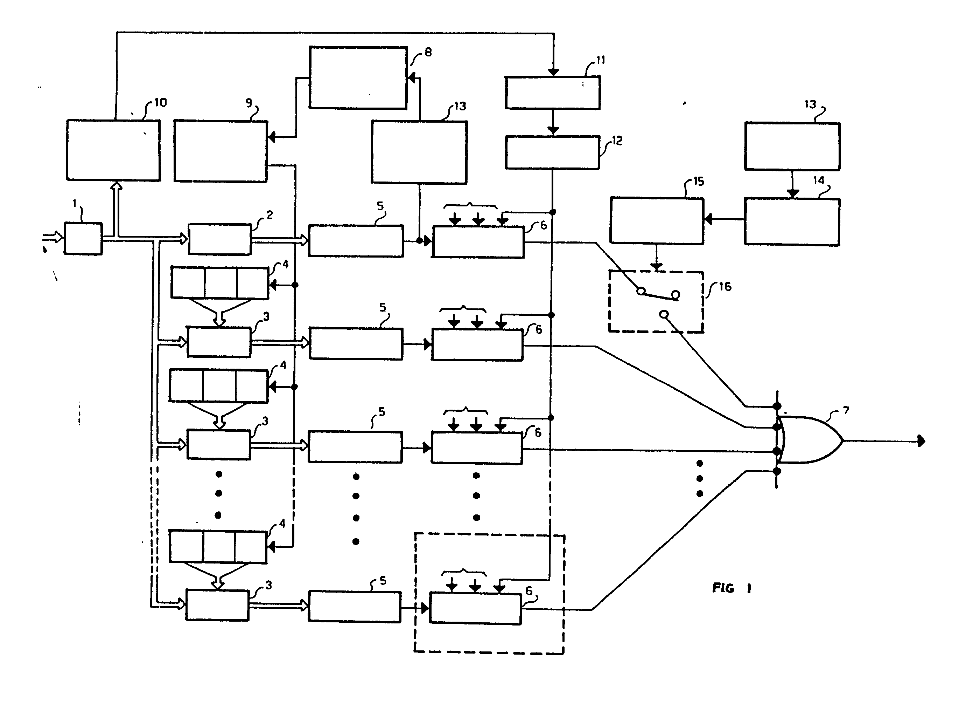

This processor (Figure 1) is constituted by a bank of Doppler filters 3 (from six to ten filters: generally for the majority of applications the number is eight), each one followed by a modulus extractor 5, by an adaptive threshold circuit 6, commonly known as an "Autogate", and finally by the recombining logic of the different outputs 7.

The "Autogate" is well known in radar techniques; reference may be made, for example, to:

(9) G. Galati—"Il Circuito Autogate nella Rivelazione Radar" (The Autogate circuit in Radar Detection) Rivista Tecnica Selenia, Vol. 1 No. 3—1973.

The limitations of the MTD processor as at is at present are as follows:

1. Fixed type of filtering, not adaptive with respect to the environment, so that the type of filtering necessary in conditions of severe clutter is used also where the clutter is weak or absent, with consequent degradation of the target detecting capability.

2. Use of the "Autogate" also in the absence of extended clutter returns, with a resulting loss of sensibility on useful targets, even through it is not indispensable.

3. The number of bits, with which the coefficients (weights) of the transverse filters (FIR) realizing the MTD Doppler filtering are represented, are not optimized.

This invention overcomes the limitations imposed by the conventional processor as will now be explained. The environment in which a radar must operate to detect the presence of a signal return, produced by a target, can vary from situations particularly disturbed to situations in which the interference is negligible. In particular an air traffic control radar may operate in:

ground clutter (that may be strong or weak);

rain clutter;

absence of ground clutter;

and every possible combination of these situations. These situations may even appear simultaneously if it is considered the extension of the region covered by a radar. There are regions with considerable interference present, and others with intermediate situations. Therefore, the system of selection of the type of filtering of the radar signal is controlled by means of a clutter map (in part fixed for the ground clutter, in part dynamically adjustable for the rain clutter) with which the processor is equipped. A bank of Doppler filters is selected with more or less severe filtering characteristics, according to whether in the zone which the radar is exploring there is more or less intense interference present.

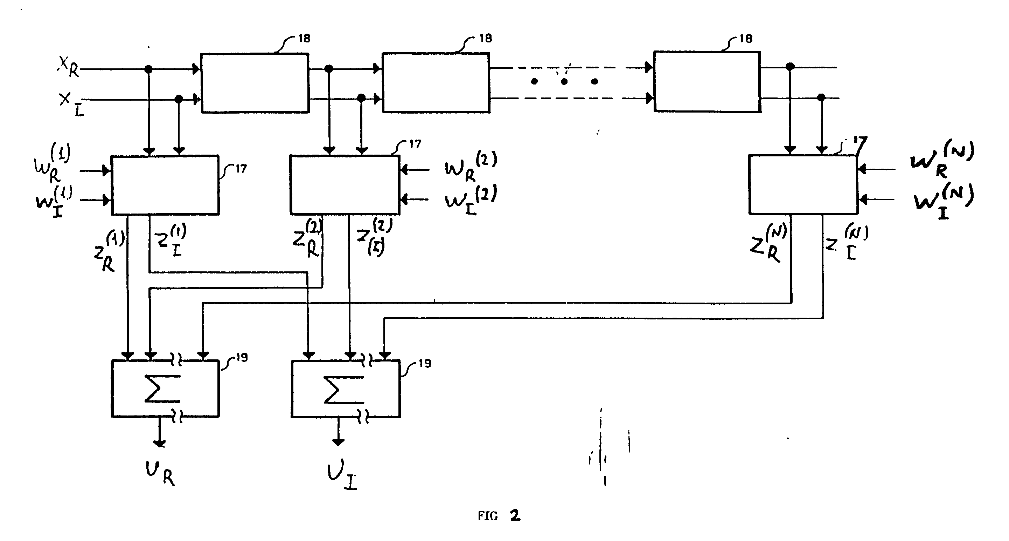

A further facility is that of disengaging the "Autogate" circuit in the absence of rain, and in its place inserting a fixed threshold, to recover the sensitivity in the detection. The type of filter used in this bank are

2

transverse, i.e., they are filters with a fixed structure, where the frequency response depends entirely on the coefficients $W_1...W_n$ employed (Figure 2). Therefore selecting the filtering means selecting the set of 'weights' $W_i$ which gives the desired frequency response.

Thus the use of frequency responses leading to a reduced radar sensitivity, is avoided if the interference present is such as to allow a less severe filtering. From this solution the following advantages are obtained in the least disturbed zones.

Better Doppler selectivity, obtained with the frequency response having a narrow main lobe and small side lobes; i.e. the performance are improved in the presence of rain and multiple targets, and in the extraction of the radial velocity.

A better division of the Doppler band by the filters, since for weak ground clutter at the extremes of the O-PRF (Pulse Repetition of Frequency) band, it is possible to use filters with a central frequency to the nominal value. (The nominal central frequency is an integer multiple of the ratio between the PRF and the number of filters).

Recovery of gain in the signal to noise ratio, with respect to the already known filters (see [3], [4], [5], [6] and [7]). This gain is about 0.8—1.6 dB down the maximum while the filters presented here introduce a loss of only 1 dB and 0.8 dB for weak clutter and absence of clutter respectively.

A further recovery of sensitivity is obtained in the present invention by means of a threshold that can be fixed or adaptive (autogate), since the insertion of the autogate leads to a loss of sensitivity [9].

In fact while the "autogate" overcomes the problem of the choice of the threshold when the environment is disturbed, at the same time it introduces a loss of sensitivity which depends on the number of samples used [9] which is here evaluated at around 1.5 dB. For this reason allowing the radar the possibility of utilizing a fixed threshold (calculated off-line) selectable by the map referred to above, allows to recover sensitivity in the zones in which a loss is not justified by the amount of interference.

As has been previously stated, the selection of the type of filtering is realized by the use of a bank of transverse filters in which the set of W coefficients is changed for each filter.

The coefficients by means of which the desired frequency responses are obtained, and which are an integral part of the invention, have been designed to take into account three interference situations (where it is understood that the number three is not intended to imply a limitation):

1. Ground clutter absent
2. Ground clutter moderate (clutter-to-Noise Ratio (CNR) within 0 to 30 dB)
3. Strong ground clutter (CNR from 30 to 45 dB).

The rain clutter has been implicitly taken into account by synthesizing the frequency responses with the side lobes as low as possible, compatible with the need of high gain in the signal-to-noise ratio.

Besides the weights adapted to the interference situations mentioned, a set of weights has been synthesized to realize a "zero filter", (Figure 1 Block 2), tuned on zero Doppler frequency with a very narrow main lobe and extremely low side lobes (around −40 dB with respect to the main lobe level).

The purpose of this filters is to allow reception in the bands which are normally opaque due to the presence of ground clutter so that the clutter map may be updated and possibly tangential targets may be detected.

In the preferred form of realization the weights are represented in fixed point digital form and precisely as 8-bit integer coefficients.

This solution is considered preferential as far as the cost/efficiency ratio of the processor is concerned.

In fact using an 8-bit logic, in the specific case, an "optimum" processor is obtained as far as the minimizing of this ratio is concerned.

The invention will be described in its present preferred form of realization, by way of illustration, although it is not limited to this form, based on the drawings of the attached figures, where:

Figure 1 shows the A-MTD processor in its preferred general configuration in which the blocks represent:

1—Analog-digital Converter;
2—Zero Filter of the bank of filters;
3—Filters from 1 to n (which in the general configuration is 7) of the bank of filters;
4—Devices which allow the selection of the weights to vary the filtering characteristics;
5—Modulus extractors;
6—Threshold circuits with selectable thresholds;
7—OR logic circuit for the combination of the outputs from the threshold circuits;
8—Circuit for the updating of the weighting selection map;
9—Memory organised as a map for the selection of the weighting;
10—Rain sensor;
11—Circuit for the loading of the Rain Clutter Map.
12—Memory organised as a map for the rain clutter;
13—Circuits for the detection of the ground clutter;
14—Circuits for the loading of the ground clutter map;
15—Memory organised as a map relative to the ground clutter;
16—Switch for the exclusion of the zero filter.

Figure 2 shows one of the typical filters of the bank of Doppler filters indicated by 2 and 3 in Figure 1.

In Figure 2 there is the complex multiplying 17, the delay element 18 and the data summer at the output of the complex multiplier.

The same filter can be realized by using a recursive structure; in this case a single delay element would suffice, a single complex multiplier and an accumulator summer.

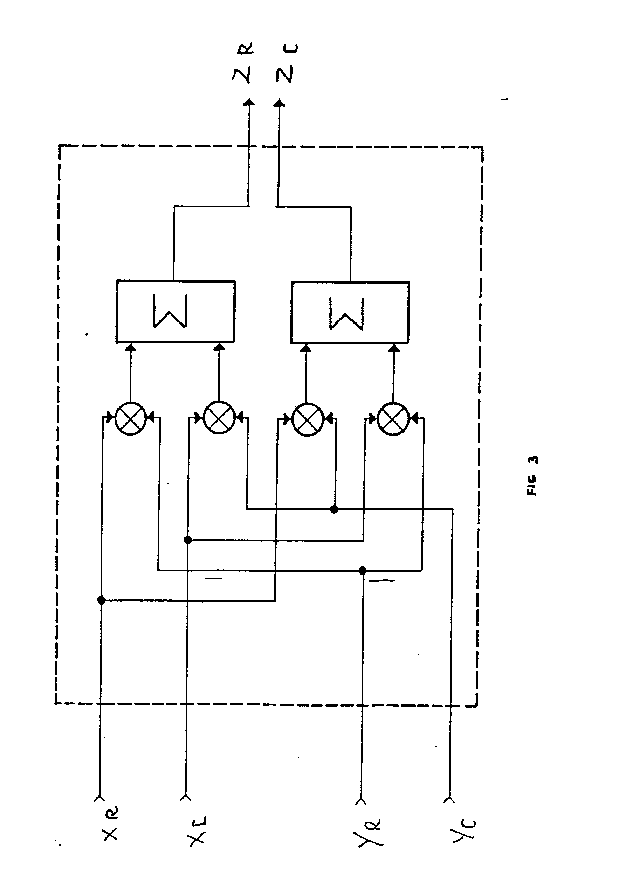

Figure 3 shows in detail the complex multiplier contained in Figure 2 and indicated with 17; the multiplier is $(X_R+jX_S)$, the multiplicand is $(Y_R+jY_I)$ and the result is

$$(Y_R Y_R - X_I Y_I) + j(X_I Y_R + X_R Y_I).$$

Figure 4 shows the threshold circuit which forms block 6 of Figure 1.

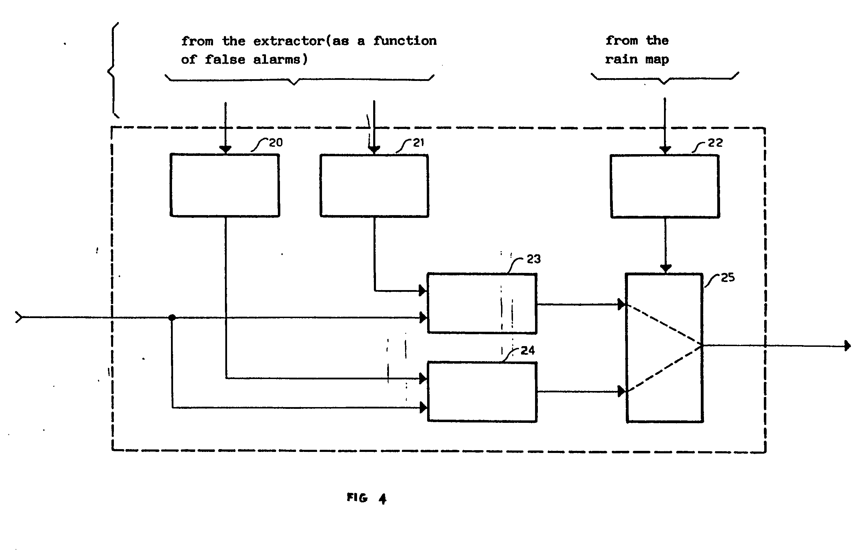

The blocks of Figure 4 are described below:

20 This block increases the fixed threshold to realize a control of the false alarms from the computer.

21 This block increases the adaptive threshold for the same reason.

22 This block provides selection between the fixed threshold and the adaptive one (Autogate) as a function of the presence of rain.

23 This block is the Autogate (adaptive threshold) already referred to

24 This block is the fixed threshold.

25 This is the block which performs the selection between the output of the fixed threshold and the output of the adaptive threshold.

The principle of operation of this invention will now be described.

The video signal coherently detected, is converted into digital form by the block 1 to then be fed to the input of the bank of Doppler filters 2, 3, 4 and simultaneously to the rain sensor.

The output of the Doppler filters are modulus detected 5, and fed to the threshold circuits 6. By means of the rain detector, 10, the loading logic circuit 11, updates the rain map memory 12, the function of which is to select the fixed or adaptive threshold contained in the threshold circuit, 6. The output of the modulus extractor, 5, connected to the "zero filter" allows, by means of a ground clutter level measuring circuit 13, and an updating logic circuit, 8, the loading of the weight selection map Memory 9.

The weight selection devices, 4, of each of the Doppler filters, are commanded by means of the weight selection map memory, 9.

The threshold circuits, 6, produce a binary type of output:

1 for a target present decision on its Doppler band, and Ø for absence of targets. All these outputs are procssed with a OR logic (block 7), which produces the final decision.

There is a facility for excluding the output of the threshold circuit, 6, connected to the "zero filter" 2, by means of a command coming from the ground clutter map, 15, and operating on the switch, 16.

A typical threshold circuit, 6, will have three control inputs (Figure 4) and an input from the modulus extractor, 5, which will be compared with the fixed threshold, 24, and the adaptive one, 23. The selector, 25, selects the output of one or the other in accordance with the command generated by block, 22, which is driven by the output of the rain map. The other two controls from the radar extractor are a function of false echoes and drive circuits 20 and 21 for the increment of the fixed and adaptive thresholds respectively.

Tables 1, 2 and 3 give the coefficients which are memorized in the weight selection devices for the three conditions of intereference mentioned and which are used for the transvers filters (F1 to F7). These coefficients have been used by way of an example which is not to be taken as limitative. Table 1 gives the coefficients suited to obtain the filtering under conditions of no ground clutter. Table 2 gives the coefficients suited for filtering under conditions of moderate or medium ground clutter. Table 3 gives the coefficients suited for filtering in conditions of high ground clutter. Table 4 gives the coefficients for the "zero filter" (FØ), indicated with 2 in Figure 1. All the coefficients should be considered as complex numbers in which the real and imaginary parts are indicated by the letters I and Q respectively.

These parts (real and imaginary) are represented with integer numbers that may be coded by mean a 8-bit digital word. This choice, dictated by considerations on the cost of realization, is not limitative as it is possible to represent the same coefficients with a different number of bits without modifying the frequency response of the filters. When the coefficients of one of the transverse filters are indicated by $W_1, W_2...W_7$, its frequency response H(f) is given by the following relationship:

$$H(f) = \sum_{k=1}^{N} W_k \exp[-j(k-1)2\pi fT]$$

where

f = Doppler frequency

T = radar pulse repetition period

j = imaginary unity

The weights given in Tables 1, 2 and 3 may be multiplied by any non-zero arbitrary constant which may also be different from filter to filter without affecting the overall performances. "For instance, in Table 5 are shown equivalent weights for Filter 1, strong clutter". Even a constant phase, possibly different from filter to filter, does not change the property of frequency response. The same frequency responses obtainable with the weights of Tables 1, 2 and 3 can be obtained possibly with small differences by means of other weights obtained from these with quantitisation using a number of bits different to 8.

The processor which is the subject of this invention has been realized with the current digital techniques using the MSI and LSI micrologic available on the market. Suitable time sharing techniques allow the circuitry to be minimized; in particular to the use of the accumulator multiplier and time sharing components permits the realization of the bank of eight doppler filters with only four printed circuits of 213×297 mm size, capable of containing up to about 45 micrologic circuits each. The whole processor consists of 35 such circuits, including the memory circuits and auxiliary functions not shown in Figure 1.

Weights $W_A$ (n=1,2,...,7) for ground clutter absent
I=Real part     Q=Imaginary part

| Weight No. | Filter 1 | | Filter 2 | | Filter 3 | | Filter 4 | | Filter 5 | | Filter 6 | | Filter 7 | |
|---|---|---|---|---|---|---|---|---|---|---|---|---|---|---|
| | I | Q | I | Q | I | Q | I | Q | I | Q | I | Q | I | Q |
| 1 | −21 | −21 | 0 | −30 | 21 | −21 | 30 | 0 | 21 | 21 | 0 | 30 | −21 | 21 |
| 2 | 0 | −65 | 65 | 0 | 0 | 65 | −65 | 0 | 0 | −65 | 65 | 0 | 0 | 66 |
| 3 | 72 | −72 | 0 | 102 | −72 | −72 | 102 | 0 | −72 | 72 | 0 | −102 | 72 | 72 |
| 4 | 127 | 0 | −127 | 0 | 127 | 0 | −127 | 0 | 127 | 0 | −127 | 0 | 127 | 0 |
| 5 | 90 | 90 | 0 | −127 | −90 | 90 | 127 | 0 | 90 | −90 | 0 | 127 | 90 | −90 |
| 6 | 0 | 102 | 102 | 0 | 0 | −102 | −102 | 0 | 0 | 102 | 102 | 0 | 0 | −102 |
| 7 | −46 | 46 | 0 | 65 | 46 | 46 | 65 | 0 | 46 | −46 | 0 | −65 | −46 | −46 |
| 8 | −30 | 0 | −30 | 0 | −30 | 0 | −30 | 0 | −30 | 0 | −30 | 0 | −30 | −0 |

EP 0 132 232 B1

TABLE 2:
Weights $W_B^{(n)}$ (n=1, 2,...,7) for weak ground clutter
I=Real part    Q=Imaginary part

| Weight No. | Filter 1 | | Filter 2 | | Filter 3 | | Filter 4 | | Filter 5 | | Filter 6 | | Filter 7 | |
|---|---|---|---|---|---|---|---|---|---|---|---|---|---|---|
| | I | Q | I | Q | I | Q | I | Q | I | Q | I | Q | I | Q |
| 1 | −7 | −22 | 24 | 11 | 11 | −20 | 21 | 0 | 11 | 20 | 24 | −11 | −7 | 22 |
| 2 | 51 | −32 | −33 | 58 | 57 | 14 | −62 | 0 | 57 | −14 | −33 | −58 | 51 | 32 |
| 3 | 75 | 71 | −99 | −62 | −87 | 54 | 102 | 0 | −87 | −54 | −99 | 62 | 75 | −71 |
| 4 | −65 | 114 | 82 | −127 | 28 | −127 | −127 | 0 | 28 | 127 | 82 | 127 | −65 | −114 |
| 5 | −126 | −35 | 127 | 81 | 68 | 112 | 127 | 0 | 68 | −112 | 127 | −81 | −126 | 35 |
| 6 | 2 | −103 | −63 | 98 | −101 | −24 | −102 | 0 | −101 | 24 | −63 | −98 | 2 | 103 |
| 7 | 59 | −14 | −55 | −39 | 50 | −31 | 62 | 0 | 50 | 31 | −55 | 39 | 59 | 14 |
| 9 | 11 | 21 | 17 | −20 | −40 | 22 | −21 | 0 | −40 | −22 | 17 | 20 | 11 | −21 |

TABLE 3:
Weights $W_c^{(n)}(n=1, 2,...,7)$ for strong ground clutter
I=Real part    Q=Imaginary part

| Weight No. | Filter 1 | | Filter 2 | | Filter 3 | | Filter 4 | | Filter 5 | | Filter 6 | | Filter 7 | |
|---|---|---|---|---|---|---|---|---|---|---|---|---|---|---|
| | I | Q | I | Q | I | Q | I | Q | I | Q | I | Q | I | Q |
| 1 | 0 | 15 | −11 | 10 | 12 | 3 | 12 | 0 | 12 | −3 | −11 | −10 | 0 | −15 |
| 2 | −36 | −9 | −30 | −41 | −39 | 23 | −44 | 0 | −39 | −23 | −30 | 41 | −36 | 9 |
| 3 | 18 | −60 | 85 | −46 | 21 | −92 | 91 | 0 | 21 | 92 | 85 | 46 | 18 | 60 |
| 4 | 76 | 24 | 48 | 123 | 72 | 109 | −127 | 0 | 72 | −109 | 48 | −123 | 76 | −24 |
| 5 | −24 | 76 | −127 | 33 | −127 | −25 | 127 | 0 | −127 | 25 | −127 | −33 | −24 | −76 |
| 6 | −60 | −20 | −12 | −94 | 76 | −53 | −91 | 0 | 76 | 53 | −12 | 94 | −60 | 20 |
| 7 | 14 | −35 | 49 | 0 | −8 | 45 | 44 | 0 | −8 | −45 | 49 | 0 | 14 | 35 |
| 8 | 12 | 9 | −2 | 15 | −7 | −10 | −12 | 0 | −7 | 10 | −2 | 15 | 12 | −9 |

# EP 0 132 232 B1

TABLE 4
Complex weights (I=Real part, Q=Imaginary part) of the filter Ø

| Weight No. | Filter Ø | |
|---|---|---|
| | I | Q |
| 1 | 18 | 0 |
| 2 | 53 | 0 |
| 3 | 96 | 0 |
| 4 | 127 | 0 |
| 5 | 127 | 0 |
| 6 | 96 | 0 |
| 7 | 53 | 0 |
| 8 | 18 | 0 |

TABLE 5
Complex weights (I=Real part, Q=Imaginary part)
of equivalent filter 1 for strong clutter.

| No. | Filter 1 | |
|---|---|---|
| | I | Q |
| 1 | 0 | 25 |
| 2 | −60 | −15 |
| 3 | 30 | −100 |
| 4 | 127 | 40 |
| 5 | −40 | 126 |
| 6 | −100 | −33 |
| 7 | 23 | −58 |
| 8 | 20 | 15 |

## Claims

1. Digital processor for a surveillance radar having a coherent video detector and an extractor, comprising a bank of transversal filters including a zero-Doppler frequency filter (2) and further Doppler filters (3), said transversal filters being arranged for receiving the coherent video detector output, a plurality of modulus extraction circuits (5) and a plurality of threshold circuits (6), each of said transversal filters being connected in series to a different one of the modulus extraction circuits and to a different one of the threshold circuits, a combining circuit (7) connected to the outputs of the threshold circuits and arranged for connection to the extractor input, clutter map generation means (10, 11, 13, 8) and a first control means connected to the threshold circuits (6) to adaptively control the thresholds of these circuits as a function of the extractor output signal, characterised in that the Doppler filters (3) are provided with selectable filter characteristics, in that the processor comprises further second control means (4, 9) connected to the Doppler filters to select the filter characteristics as a function of the data from the clutter map generation means, and in that the threshold circuits are arranged to be operated in two different modes comprising fixed and adaptive thresholds, respectively depending on a selection signal from a selection circuit (12) controlled by the clutter map generation means.

9

2. Digital processor as in Claim 1, wherein the clutter map generation means comprises a first clutter map generation means (13, 8) connected between the zero-Doppler frequency filter (2) and the second control means (4, 9), the second control means being arranged to select the Doppler filter characteristics as a function of the ground clutter supplied to said second control means from the first clutter map generation means, and wherein the transversal filters (2, 3) are digital filters including weighting means receiving sets of weighting coefficients, each set being associated with a given filter characteristic.

3. Digital processor as in Claim 1 or 2, wherein each of the threshold circuits (6) comprises a fixed threshold device (24) and an adaptive threshold device (23) which are respectively selected by the selection circuit (12) so as to define the fixed or adaptive operation mode for the threshold circuits.

4. Digital processor as in Claim 3, wherein the clutter map generation means comprises a second clutter map generation means (10, 11) arranged for connection beween the coherent video detector and the selection circuit, the second clutter map generation means comprising a rain sensor (10) and a rain clutter map generator (11) in series.

5. Digital processor as in Claim 3 wherein the fixed and adaptive threshold devices are further arranged (20, 21) for receiving signals from the extractor so as to control automatically the number of false alarms.

6. Digital processor as in one of the preceding claims wherein the weighting coefficients of the transversal filters (2, 3) are represented by digital words of eight bits.

7. Digital processor as in Claim 2 wherein the Doppler filters (3) are provided with three different selectable characteristics respectively corresponding to a strong ground clutter, a weak ground clutter and a nul ground clutter condition.

8. Digital processor as in Claim 2 wherein the zero-Doppler frequency filter (2) is provided with a single predetermined characteristic.

9. Digital processor as in Claim 7 wherein the weighting coefficients are represented by complex numbers, different from filter to filter.

**Patentansprüche**

1. Digitalprozessor für ein Überwachungsradar mit einem Kohärenz-Video-Detektor und einem Extraktor, umfassend eine Bank von Transversalfiltern, die ein Null-Dopplerfrequenz-Filter (2) und weitere Doppler-Filter (3) enthält, von denen die Transversalfilter zum Empfang des Kohärenz-Video-Detektor-Ausgangssignals angeordnet sind, mehrere Modulus-Extraktionsschaltungen (5) und mehrere Schwellenwertschaltungen (6), wobei jedes der Transversalfilter in Reihe zu einer verschiedenen der Modulus-Extraktionsschaltungen und zu einer verscheidenen der Schwellenwertschaltungen gekoppelt ist, eine Kombinierschaltung (7), die an die Ausgänge der Schwellenwertschaltungen gekoppelt ist und ausgestaltet ist für die Verbindung mit dem Extraktor-Eingang, einer Clutter-Karten-Erzeugungseinrichtung (10, 11, 13, 8) und eine erste Steuereinrichtung, die an die Schwellenwertschaltungen (6) angeschlossen ist, um die Schwellenwerte dieser Schaltungen als Funktion des Ausgangssignals des Extraktors adaptiv zu steuern, dadurch gekennzeichnet, daß die Doppler-Filter (3) mit wählbaren Filterkennlinien ausgestattet sind, daß der Prozessor weiterhin eine zweite Steuereinrichtung (4, 9) aufweist, die an die Doppler-Filter angeschlossen ist, um die Filterkennlinien als Funktion der Daten von der Clutter-Karten-Erzeugungseinrichtung auszuwählen, und daß die Schwellenwertschaltungen so angeordnet sind, daß sie in zwei verschiedenen Betriebsarten mit festen und mit adaptiven Schwellenwerten arbeiten, jeweils abhängig von einem Auswahlsignal von einer durch die Clutter-Karten-Erzeugungseinrichtung gesteuerten Wählschaltung (12).

2. Digitalprozessor nach Anspruch 1, bei dem die Clutter-Karten-Erzeugungseinrichtung eine erste Clutter-Karten-Erzeugungseinrichtung (13, 8), die zwischen das Null-Dopplerfrequenz-Filter (2) und die zweite Steuereinrichtung (4, 9) geschaltet ist, aufweist, die zweite Steuereinrichtung derart ausgestaltet ist, daß sie die Doppler-Filter-Kennlinien als Funktion des der zweiten Steuereinrichtung von der ersten Clutter-Karten-Erzeugungseinrichtung zugeführten Bodenclutters auswählt, und die Transversalfilter (2, 3) Digitalfilter mit Wichtungsmitteln sind, welche Sätze von Wichtungskoeffizienten empfangen, die jeweils zugehörig zu einer gegebenen Filterkennlinie eingestellt sind.

3. Digitalprozessor nach Anspruch 1 oder 2, bei dem jede der Schwellenwertschaltungen (6) ein Fest-Schwellenwert-Gerät (24) und ein adaptives Schwellenwert-Gerät (23) aufweisen, die durch die Wählschaltung (12) ausgewählt werden, um die feste oder die adaptive Betriebsweise für die Schwellenwertschaltung zu definieren.

4. Digitalprozessor nach Anspruch 3, bei dem die Clutter-Karten-Erzeugungseinrichtung eine zweite Clutter-Karten-Erzeugungseinrichtung (10, 12) aufweist, die ausgebildet ist zur Verbindung zwischen dem Kohärenz-Video-Detektor und der Wählschaltung, wobei die zweite Clutter-Karten-Erzeugungseinrichtung einen Regensensor (10) und einen Regenclutterkarten-Generator (11) in Reihe aufweist.

5. Digitalprozessor nach Anspruch 3, bei dem das Gerät für festen und das Gerät für adaptiven Schwellenwert weiterhin ausgebildet sind (20, 21) zur Aufnahme von Signalen von dem Extraktor, um die Anzahl von Fehlalarmen automatisch zu steuern.

6. Digitalprozessor nach einem der vorhergehenden Ansprüche, bei dem die Wichtungskoeffizienten der Transversalfilter (2, 3) durch Digitalworte aus 8 Bits dargestellt werden.

7. Digitalprozessor nach Anspruch 2, bei dem die Doppler-Filter mit drei verschiedenen wählbaren Kennlinien ausgestattet sind, die einem starken Bodenclutter, einem schwachen Bodenclutter und der Bedingung eines fehlenden Bodenclutters entsprechen.

8. Digitalprozessor nach Anspruch 2, bei dem das Null-Dopplerfrequenz-Filter (2) mit einer einzelnen vorbestimmten Kennlinie versehen ist.

9. Digitalprozessor nach Anspruch 7, bei dem die Wichtungskoeffizienten dargestellt werden durch von Filter zu Filter verschiedene komplexe Zahlen.

**Revendications**

1. Processeur numérique pour un radar de surveillance ayant un détecteur vidéo cohérent et un extracteur, composé d'un banc de filtres transversaux comprenant un filtre (2) Doppler de fréquence nulle et d'autres filtres Doppler (3), lesdits filtres transversaux étant agencés pour recevoir la sortie du détecteur vidéo cohérent, une pluralité de circuits (5) d'extraction de modules et une pluralité de circuits (6) à seuil, chacun desdits filtres transversaux étant connecté en série à un circuit différent d'extraction de modules et à un circuit différent à seuil, un circuit de combinaison (7) connecté aux sorties des circuits à seuil et adapté pour être connecté à l'entrée de l'extracteur, des moyens (10, 11, 13, 8) de génération d'un plan ou carte ou encore d'un diagramme de fouillis d'échos et un premier moyen de commande connecté aux circuits (6) à seuil pour commander, de façon adaptative, les seuils de ces circuits en fonction du signal de sortie de l'extracteur, caractérisé en ce que les filtres Doppler (3) possèdent des caractéristiques de filtrage que l'on peut choisir, en ce que le processeur comporte en plus des deuxièmes moyens (4, 9), de commande connectés aux filtres Doppler pour sélectionner les caractéristiques de filtrage en fonction des données des moyens de génération de plan ou diagramme de fouillis d'échos, et en ce que les circuits à seuil sont adaptés à fonctionner selon deux modes différents mettant en jeu respectivement des seuils fixes et adaptatifs en fonction d'un signal de sélection généré par un circuit de sélection 12 commandé par les moyens de génération du plan ou du diagramme de fouillis d'échos.

2. Processeur numérique selon la revendication 1, caractérisé en ce que les moyens de génération du plan de fouillis d'échos comportent des premiers moyens (13, 8) de génération de plan connectés entre le filtre (2) Doppler à fréquence nulle et des deuxièmes moyens (4, 9) de commande, ces deuxièmes moyens de commande étant adaptés pour sélectionner les caractéristiques de filtrage Doppler en fonction des fouillis d'échos de sol adressés auxdits deuxièmes moyens de commande par les premiers moyens de génération de plan, et en ce que les filtres transversaux (2, 3) sont des filtres numériques comportant des moyens de pondération qui reçoivent des jeux de coefficients de pondération, chaque jeu étant associé à une caractéristique donnée de filtrage.

3. Processeur numérique selon la revendication 1 ou 2, caractérisé en ce que chacune des circuits (6) à seuil comporte un dispositif (24) à seuil fixe et un dispositif (23) à seuil adaptatif qui sont choisis respectivement par le circuit (12) de sélection afin de définir le fonctionnement des circuits à seuil en mode fixe ou en mode adaptatif.

4. Processeur numérique selon la revendication 3, caractérisé en ce que les moyens de génération du plan de fouillis d'échos comportent des deuxièmes moyens (10, 11) de génération de plan de fouillis d'échos agencés pour être connectés entre le détecteur vidéo cohérent et le circuit de sélection, ces deuxièmes moyens de génération de plan comportant un détecteur de pluie (10) et un générateur (11) de plan d'échos de pluie montés en série.

5. Processeur numérique selon la revendication 3, caractérisé en ce que les dispositifs à seul fixe et adaptatifs sont agencés (20, 21) à recevoir des signaux de l'extracteur afin de régler automatiquement le nombre de fausses alertes.

6. Processeur numérique selon l'une des revendications précédentes, caractérisé en ce que les coefficients de pondération des filtres transversaux (2, 3) sont représentés par des mots de 8 bits.

7. Processeur numérique selon la revendication 2, caractérisé en ce que les filtres Doppler (3) possèdent trois caractéristiques différentes et sélectionnables correspondant respectivement à des fouillis d'échos de sol intenses, à des fouillis d'échos de sol faibles et à des conditions de fouillis d'échos de sol de niveau zéro.

8. Processeur numérique selon la revendication 2, caractérisé en ce que le filtre (2) à fréquence zéro-Doppler possède une seul caractéristique qui est prédéterminée.

9. Processeur numérique selon la revendication 7, caractérisé en ce que les coefficients de pondération sont représentés par des nombres complexes, qui différent d'un filtre à l'autre.

FIG 1

FIG 2

FIG 3

EP 0 132 232 B1

from the extractor(as a function
of false alarms)

from the
rain map

20

21

22

23

25

24

FIG 4